# FASCICULE DE BREVET EUROPEEN

(11) **EP 3 257 234 B1**
(45) Date de publication et mention de la délivrance du brevet: **27.06.2018**
(21) Numéro de dépôt: 16707916.9
(22) Date de dépôt: 12.02.2016
(51) Int. Cl.: H04L 29/12

(54) **PROCEDE DE RESOLUTION D'UNE ADRESSE IP, SERVEUR ET PROGRAMME D'ORDINATEUR CORRESPONDANTS**
VERFAHREN ZUR AUFLÖSUNG EINER IP ADRESSE, ENTSPRECHENDER SERVER UND COMPUTERPROGRAMM
METHOD FOR IP ADDRESS RESOLUTION, CORRESPONDING SERVEUR AND COMPUTER PROGRAMME.

(30) Priorité: 13.02.2015 FR 1551243; 12.05.2015 FR 1554278
(43) Date de publication de la demande: 20.12.2017
(73) Titulaire: Kerlink, 35235 Thorigne-Fouillard (FR)
(72) Inventeur: DELIBIE, Yannick, 35235 Thorigne-Fouillard (FR); TOUTAIN, Laurent, Cesson Sevigne (FR); PELOV, Alexander, Rennes (FR)
(74) Mandataire: Loyer & Abello
(86) Numéro de dépôt international: PCT/FR2016/050329
(87) Numéro de publication internationale: WO 2016/128692

(56) Documents cités:
- US-A1- 2011 208 863
- FINLAYSON ET AL: "A Reverse Address Resolution Protocol; rfc903.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 juin 1984 (1984-06-01), XP015006895, ISSN: 0000-0003

## Description

### 1. Domaine de l'invention

Le domaine de l'invention est celui de l'Internet des objets. Il concerne plus particulièrement l'interconnexion de réseaux locaux sans-fil longue portée avec le coeur d'un réseau étendu, tel que le réseau Internet, et notamment le cas où ces réseaux (locaux et étendu) reposent sur des protocoles de communication hétérogènes.

### 2. Art antérieur

L'internet des objets est en plein essor. Cette évolution s'accompagne de l'émergence de nouvelles applications, qui dépassent le simple cadre traditionnel du foyer ou de l'entreprise, pour venir s'intégrer au sein d'infrastructures beaucoup plus vastes. Le concept de « villes intelligentes » (ou « smart cities » en anglais) s'inscrit notamment dans ce cadre. Au moyen du déploiement à grande échelle de réseaux de capteurs sans fils, ou autres objets communicants, il devient ainsi possible de proposer de nouveaux services aux citoyens, ou aux autorités en charge d'administrer une ville. L'éventail des possibilités est large. L'éclairage urbain peut ainsi être optimisé, en l'adaptant dynamiquement en fonction de l'état du trafic routier à un instant considéré, par exemple. La gestion du stationnement peut également être facilitée, en informant en temps-réel les automobilistes des emplacements des places disponibles, grâce à des capteurs intégrés à chacun de ces emplacements. Ceci contribue par exemple à réduire la consommation de carburant des véhicules et donc la pollution.

Parmi les critères déterminants pour le déploiement d'un tel réseau d'objets communicants sans-fil, il en est un qui est essentiel : l'autonomie. A titre d'exemple, pour des raisons évidentes de coût de maintenance, la pile qui alimente un capteur intégré dans la chaussée dans le but de détecter si une place de parking est libre ou occupée doit être en mesure d'assurer l'alimentation électrique de ce capteur pendant au moins plusieurs années. Aussi, une des particularités de ces objets communicants est d'être basse consommation. Toujours dans l'objectif d'optimiser au mieux la consommation électrique de ces objets communicants, la quantité d'information à transmettre est également maitrisée et le débit de transmission réduit. Le protocole de communication utilisé au sein d'un tel réseau local d'objets communicants est donc adapté en conséquence, et ces contraintes font qu'un réseau basé sur le protocole IP (« Internet Protocol ») n'est pas toujours adapté.

Cependant, afin d'étendre les applications possibles et de rendre disponibles les informations collectées au plus grand nombre, une interconnexion entre le réseau sans-fil local formé par ces objets communicants et un réseau étendu tel qu'Internet est souvent souhaitée. Se pose alors le problème de faire communiquer des équipements (des objets communicants d'une part, et des serveurs par exemple d'autre part) présents sur des réseaux de communication basés sur des protocoles de communication hétérogènes. Des solutions existent, mais sont généralement limitées. Par exemple, alors que, dans le monde des terminaux de communication connectés à Internet, un simple point d'accès suffit pour faire communiquer un équipement avec tout autre équipement également connecté au réseau, la mise à disposition des données émises par un réseau de capteurs repose actuellement majoritairement sur des solutions propriétaires et intégrées, complexes à mettre en oeuvre. Un autre facteur limitant de ces solutions est qu'elles mettent généralement en oeuvre une communication unilatérale seulement : les objets communicants sur le réseau local émettent des données qui sont effectivement transmises à des serveurs sur le réseau étendu, mais ces derniers ne sont pas en mesure de transmettre en retour des données à destination des objets communicants, faute de pouvoir les identifier. US 2011/0208863 divulgue des noms de domaine comprenant une adresse MAC.

### 3. Résumé de l'invention

L'invention offre une solution qui ne présente pas au moins certains de ces problèmes de l'art antérieur, grâce à un procédé original de résolution d'une adresse IP défini par la revendication 1.

Ainsi, le procédé de résolution d'une adresse IP peut être mis en oeuvre au sein d'un serveur DNS (« Domain Name System ») classique, dans la mesure où la donnée représentative d'une adresse MAC présente le même formalisme qu'un nom de domaine.

Ainsi, le procédé de résolution d'une adresse MAC permet d'identifier les serveurs distants avec lesquels des objets communicants doivent échanger des données. Ainsi, l'usage classique d'un serveur DNS est astucieusement détourné pour permettre d'identifier un équipement de destination avec lequel un équipement source doit communiquer.

Selon un mode de réalisation particulier de l'invention, le procédé de résolution d'une adresse IP comprend en outre au moins une étape de recherche, au sein d'une structure de données, d'au moins une information complémentaire en fonction de ladite donnée représentative d'une adresse MAC, ladite au moins une information complémentaire étant transmise conjointement à ladite adresse IP, lors de ladite étape de transmission de ladite adresse IP.

Alternativement, et selon encore un mode de réalisation particulier de l'invention, le procédé de résolution d'une adresse IP comprend en outre au moins une itération des étapes suivantes :
- une étape de réception d'une requête complémentaire, ladite requête complémentaire comprenant ladite donnée représentative d'une adresse MAC et une donnée représentative d'un type de requête ;
- une étape de recherche, au sein d'une structure de données, d'au moins une information complémentaire, en fonction de ladite donnée représentative d'une adresse MAC et de ladite donnée représentative d'un type de requête ;
- une étape de transmission de ladite au moins une information complémentaire.

Ainsi, le procédé de résolution d'une adresse IP permet également d'obtenir, en complément de l'adresse IP d'un serveur de destination, des informations complémentaires par exemple utiles à la mise en oeuvre d'une communication avec ce serveur de destination, par exemple un numéro de port à contacter sur ce serveur de destination ou encore un protocole de communication à utiliser pour ladite communication. Ce procédé peut toujours être mis en oeuvre au sein d'un serveur DNS (« Domain Name System ») classique, lorsque la donnée représentative d'une adresse MAC présente le même formalisme qu'un nom de domaine, le type de requête étant alors utilisé pour préciser le type d'information complémentaire à obtenir au sein des tables DNS. La récupération des informations complémentaires peut être mise en oeuvre simultanément à la récupération de l'adresse IP du serveur distant, au moyen d'une seule et même requête (par exemple au moyen d'une requête DNS de type ANY), ou alternativement au moyen d'un enchaînement de plusieurs requêtes de différents types.

Selon un mode de réalisation particulier de l'invention, ladite au moins une information complémentaire appartient au groupe comprenant :
- un numéro de port;
- un nom d'hôte ;
- un type de service ;
- un protocole de communication.

Dans un autre aspect, l'invention se rapporte également à un serveur de résolution d'une adresse IP défini par la revendication 5.

En conséquence, l'invention vise aussi un produit programme défini par la revendication 6.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Les différents modes de réalisation mentionnés ci-dessus sont combinables entre eux pour la mise en oeuvre de l'invention.

### 4. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 présente une vue d'ensemble du contexte général de l'invention, dans un mode de réalisation particulier ;
- la figure 2 illustre les principales étapes mises en oeuvre par le procédé de résolution d'une adresse IP, dans un mode de réalisation particulier de l'invention ;
- la figure 3 décrit une architecture simplifiée d'un serveur apte à mettre en oeuvre le procédé proposé, dans un mode de réalisation particulier de l'invention.

### 5. Description détaillée

### 5.1 Contexte général

L'invention se rapporte à un procédé de résolution d'une adresse IP dans un contexte de session de communication bidirectionnelle entre un objet communicant d'une part et un équipement tel qu'un serveur distant ou un terminal de communication mobile d'autre part, l'objet communicant et l'équipement appartenant chacun à des réseaux différents reposant sur des protocoles de communication hétérogènes. Ce procédé est mis en oeuvre au sein d'une passerelle interconnectant ces deux réseaux, ou au sein d'un serveur de résolution que cette passerelle peut interroger. Dans toute la suite du document, on considère que ledit équipement est un serveur distant, mais cet exemple est donné à titre illustratif et non limitatif.

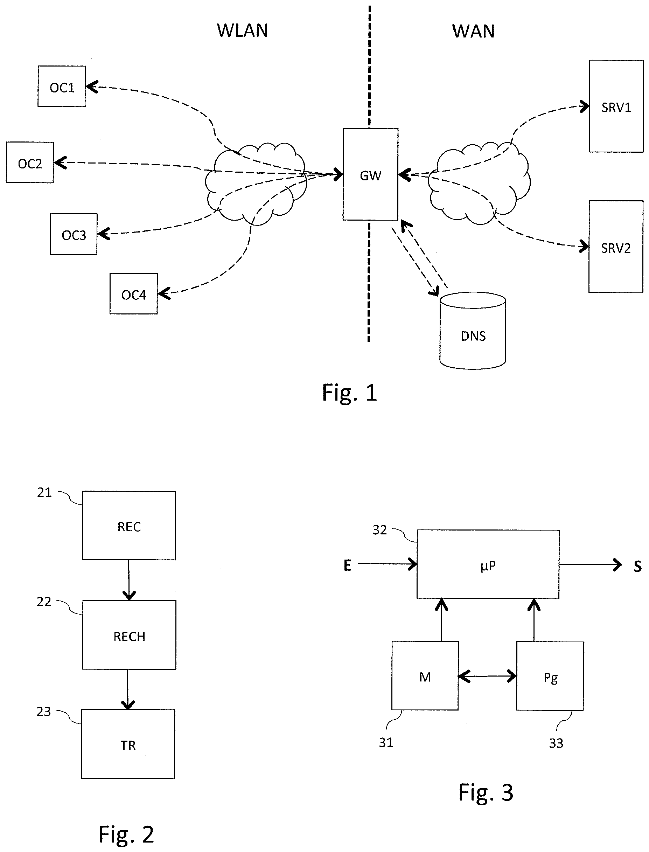

On présente, en relation avec la **figure 1**, une vue d'ensemble du contexte général de l'invention, dans un mode de réalisation particulier. Un premier réseau de communication sans-fil local (WLAN pour « Wireless Local Area Network ») est interconnecté à un réseau de communication étendu (WAN pour Wide Area Network) - typiquement le réseau Internet - au moyen d'une passerelle (GW). Ladite passerelle comprend donc des interfaces réseaux lui permettant d'appartenir à la fois au réseau local et au réseau étendu.

Outre la passerelle (GW), le réseau sans-fil local comprend un ensemble d'objets communicants (OC) (la figure 1 présente à titre d'exemple un réseau local qui contient quatre objets communicants OC1 à OC4, mais ceci est purement illustratif : le nombre d'objets communicants présents dans le réseau local selon la technique proposée est quelconque). Ces objets communicants peuvent par exemple être des capteurs sans-fil. Ils ont la particularité d'être basse consommation et d'utiliser des moyens de communication très bas débit (<2Kbps). Ces objets communicants fonctionnent majoritairement sur pile. Afin d'optimiser leur consommation, les plages de temps durant lesquelles ils sont aptes à émettre ou recevoir des données sont limitées. En dehors de ces plages d'émission et/ou de réception, un objet communicant est par exemple en état de veille, ce qui lui permet de réduire sa consommation électrique. Dans le cadre de l'invention, le réseau de communication sans-fil local (WLAN) ne repose pas sur le protocole de communication IP. Il peut s'agir d'un réseau Zigbee®, ou encore d'un réseau Bluetooth® classique ou Low Energy (Bluetooth Smart®), ou de tout autre réseau non fondé sur le protocole de communication IP. Le protocole de communication utilisé sur ce réseau local est néanmoins adressé : chaque objet communicant (OC) peut ainsi être identifié de manière unique sur ce réseau, au moyen d'un identifiant propre, par exemple une adresse MAC (de l'anglais « Media Access Control »).

Le réseau de communication étendu (WAN) repose pour sa part sur le protocole de communication IP. Il s'agit typiquement du réseau Internet. Chaque équipement connecté à ce réseau est donc identifié par une adresse IP. Ce réseau comprend notamment la passerelle (GW), mais également des serveurs distants (SRV) configurés pour la collecte et le traitement des informations en provenance de tout ou partie des différents objets communicants présents sur le réseau de communication sans-fil local (seuls deux serveurs distants SRV1 et SRV2 sont représentés sur la figure 1, mais il va de soi qu'il s'agit là encore d'un exemple purement illustratif). Il peut également comprendre des serveurs de type serveur DNS (« Domain Name System ») aptes à être interrogés pour la résolution d'adresses (un seul est représenté, à titre d'exemple, sur la figure 1), par exemple en vue d'obtenir l'adresse IP associée à un nom de domaine donné.

Afin de pouvoir établir une communication entre un objet communicant et un serveur distant, la passerelle (GW) joue le rôle d'une plate-forme d'aiguillage, apte à véhiculer les données en provenance d'un objet communicant vers le serveur distant idoine, et inversement.

Aussi, la passerelle doit disposer d'un mécanisme permettant d'établir une session de communication bidirectionnelle entre un objet communicant, initiateur de la communication, et le serveur distant avec lequel il souhaite communiquer, ces équipements appartenant à des réseaux utilisant des protocoles de communication hétérogènes. C'est ce mécanisme, qui garantit l'adressabilité et la translation des adresses entre ces deux réseaux (WLAN et WAN), qui fait l'objet de la présente invention, et plus particulièrement le mécanisme permettant à la passerelle d'identifier le serveur de destination de données émises par un objet communicant.

### 5.2 Principe général et cas d'utilisation

Afin de répondre à cette problématique, il est proposé ici, en relation avec la **figure 2****,** un procédé de résolution d'une adresse IP caractérisé en ce qu'il comprend :
- une étape de réception (21) d'une requête de résolution d'adresse, ladite requête comprenant une donnée représentative d'une adresse MAC ;
- une étape de recherche (22), au sein d'une structure de données, d'une adresse IP, en fonction de ladite donnée représentative d'une adresse MAC;
- une étape de transmission (23) de ladite adresse IP.

Dans le contexte de l'invention, l'établissement d'une session de communication entre un objet communicant et un serveur distant est toujours réalisé à l'initiative de l'objet communicant. Par ailleurs, la passerelle dispose de moyens lui permettant d'obtenir, par exemple en fonction de l'identifiant représentatif de l'objet communicant dans le réseau local, une adresse IP du serveur distant auquel transmettre les données en provenance de l'objet communicant, ainsi qu'un port de destination à utiliser. Ces moyens, qui font l'objet de la présente invention, sont détaillés ultérieurement dans le document. La passerelle, qui dispose de sa propre adresse IP sur le réseau étendu, est donc en mesure de transmettre audit serveur distant la charge utile reçue d'un objet communicant, selon les protocoles de communication standards d'un réseau IP, typiquement un protocole de la couche de transport de la pile de protocole TCP/IP, tel que le protocole UDP (pour « User Datagram Protocol ») ou le protocole TCP (« Transmission Control Protocol).

Dans le contexte de l'invention, un même serveur distant est cependant apte à recevoir des informations en provenance d'une multitude d'objets communicants. Aussi, un même couple adresse IP/port représentatif d'un service d'un serveur distant de destination est généralement associé à une multitude d'objets communicants. Du point du vue du serveur, toutes les informations reçues sur ce port proviennent cependant d'un même équipement : la passerelle. Afin s'assurer la bidirectionnalité des échanges, la passerelle doit donc être en mesure d'aiguiller les données reçues d'un serveur vers le bon objet communicant, celui qui a initié la session de communication avec ce serveur. A cette fin, à réception d'une trame de données en provenance d'un objet communicant, la passerelle attribue à cet objet communicant un numéro de port, qui ne sera associé qu'à lui pour toute la durée d'une session de communication avec le serveur distant auquel il doit transmettre ses données. Ce numéro de port est utilisé comme port source, conjointement à l'adresse IP de la passerelle sur le réseau étendu, lors de la transmission, de la passerelle vers le serveur distant, d'une charge utile reçue par la passerelle en provenance d'un objet communicant. De cette manière, lorsque la passerelle reçoit en retour des données en provenance d'un serveur distant, elle est en mesure, sur la base du port sur lequel elle reçoit ces données, de déterminer l'objet communicant auquel sont destinées ces données.

On s'intéresse ici au mécanisme permettant à la passerelle de déterminer le serveur distant auquel un objet communicant doit transmettre des données. A cette fin, le procédé de résolution d'une adresse IP, déjà décrit en relation avec la figure 2, est mis en oeuvre. Ce procédé permet, à partir d'un identifiant d'un objet communicant dans le réseau sans-fil local, (typiquement son adresse MAC), d'identifier l'adresse IP (Ipv4 ou IPv6) et éventuellement le port du serveur distant avec lequel cet objet communicant doit échanger des données.

Dans l'invention, ce procédé peut être mis en oeuvre au sein même de la passerelle interconnectant le réseau sans-fil local et le réseau étendu. La passerelle dispose alors d'une structure de données au sein de laquelle sont stockées des associations entre des identifiants (des adresses MAC) d'objets communicants et des adresses IP et/ou des numéros de ports associés à des serveurs distants. Selon le protocole l'utilisé sur le réseau de communication sans-fil local, la clé de recherche de l'adresse peut être basée sur des champs différents (par exemple le champ DevADDR (incluant le NET ID) pour le protocole LoRaWAN ; le champ A-FIELD pour le protocole ; le champ SRC PAN et/ou SRC ADRR pour le protocole IEEE802.15.4).

Alternativement, ledit procédé est mis en oeuvre au sein d'un serveur externe à la passerelle, que la passerelle peut interroger. La réception, au niveau de la passerelle, d'un datagramme contenant l'adresse MAC (EUI-48/64) d'un objet communicant, déclenche alors une requête de résolution d'adresse auprès de ce serveur externe, afin de déterminer le serveur distant de destination des données émises par l'objet communicant. Dans un autre mode de réalisation particulier de l'invention, ce serveur externe est un serveur DNS (« Domain Name System ») classique, qui permet de traduire un nom de domaine en adresse IP. Dans ce cas, la base de donnée d'adresse (DNS) peut par exemple s'appuyer sur une table DNS de type A ou AAAA (IPV6), qui permet de localiser le serveur dont une entrée est similaire à l'exemple suivant (donné à titre purement illustratif):
0086544567768954.wellknown_domain IN A 91.198.174.232

Pour des raisons de respect de nomenclature, l'adresse MAC (EUI48/64) (dans l'exemple ci-dessus « 00:86:54:45:67:76:89:54 ») est alors représenté sans le caractère séparateur « : ». La construction d'une donnée représentative d'une adresse MAC sous la forme d'un nom de domaine (en concaténant cette adresse MAC avec un nom de domaine de niveau supérieur prédéterminé) permet alors de détourner astucieusement la fonctionnalité d'un serveur DNS, et de se servir d'un tel serveur pour obtenir une adresse IP d'un serveur avec lequel un objet communicant doit communiquer, en fonction de l'adresse MAC dudit objet communicant.

La technique proposée permet également, dans un autre mode de réalisation particulier de l'invention, d'obtenir des informations complémentaires en plus de l'adresse IP du serveur avec lequel l'objet communicant est destiné à communiquer. Ces informations complémentaires peuvent, à titre illustratif mais non limitatif, consister en un numéro de port identifiant le service à contacter au sein du serveur distant, un nom d'hôte caractérisant ce service, ou encore le protocole de communication à utiliser dans le cadre d'une communication avec ce service (par exemple HTTP sur TCP, CoAP sur UDP, etc.). Dans ce cadre, les fonctionnalités classiques d'un serveur DNS sont une nouvelle fois habilement détournées, afin d'obtenir ces informations complémentaires en fonction d'une donnée représentative d'une adresse MAC de l'objet communiquant à l'origine d'une communication. En effet, un serveur DNS intègre déjà des mécanismes permettant d'obtenir des informations complémentaires relatives aux différents services disponibles sur un serveur distant, grâce à un typage des requêtes qui lui sont adressées : en plus des requêtes de type A ou AAAA permettant l'obtention d'une adresse IP en fonction d'un nom de domaine, un serveur DNS accepte en effet d'autres types de requêtes (par exemple des requêtes de type PTR (pointeur) ou SRV (service)) donnant accès à des informations complémentaires. Ainsi, de manière analogue à la technique déjà exposée précédemment pour la récupération de l'adresse IP du serveur distant avec lequel un objet communicant doit communiquer, un serveur DNS peut également être utilisé pour obtenir des informations complémentaires caractérisant le service avec lequel cet objet communicant doit être mis en relation au sein de ce serveur distant (numéro de port du service à contacter, protocole de communication à utiliser, etc.). Une donnée représentative de l'adresse MAC de l'objet communicant est là encore utilisée comme clé de recherche au sein des tables DNS, le type de requête adressé au serveur DNS servant alors à indiquer le type d'informations complémentaires à récupérer. Sur le même principe que celui décrit précédemment, cette donnée prend astucieusement la forme d'un nom de domaine (il s'agit par exemple de la même donnée que celle qui a servi à la récupération de l'adresse IP du serveur distant avec lequel l'objet communicant doit communiquer, mais utilisée conjointement à un type de requête DNS différent).

La technique proposée dans la présente demande permet donc bien, en fonction d'une adresse MAC d'un objet communicant, d'identifier un serveur distant avec lequel cet objet communicant doit communiquer, et d'obtenir toutes les informations utiles à la mise en oeuvre d'une telle communication.

La récupération, par interrogation d'un serveur DNS, de l'adresse IP d'un serveur distant et des informations complémentaires associées peut faire l'objet d'un enchainement de plusieurs requêtes de différents types adressées à ce serveur DNS. Alternativement, l'ensemble de ces données (l'adresse IP du serveur distant et les informations complémentaires associées, telles qu'un numéro de port) peut également être récupéré au moyen d'une seule et même requête (par exemple une requête DNS de type ANY).

### 5.3 Dispositif pour la mise en oeuvre de l'invention

On décrit, en relation avec la **figure 3**, un serveur de résolution comprenant des moyens permettant la résolution d'une adresse IP selon l'invention. Un tel serveur de résolution comprend :
- des moyens de réception d'une requête de résolution d'adresse, ladite requête comprenant une donnée représentative d'une adresse MAC ;
- des moyens de recherche, au sein d'une structure de données, d'une adresse IP, en fonction de ladite donnée représentative d'une adresse MAC;
- des moyens de transmission de ladite adresse IP.

Par exemple, le serveur comprend une mémoire 31 constituée d'une mémoire tampon, une unité de traitement 32, équipée par exemple d'un microprocesseur, et pilotée par le programme d'ordinateur 33, mettant en oeuvre le procédé de résolution d'une adresse IP selon l'invention.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée (E) par exemple une requête de résolution d'adresse en provenance d'un équipement connecté au réseau, par exemple une passerelle interconnectant un réseau local et un réseau étendu. Le microprocesseur de l'unité de traitement 32 réalise les étapes du procédé de résolution d'adresse IP, selon les instructions du programme d'ordinateur 33 pour déterminer une adresse IP de destination, et transmettre en sortie (S) cette adresse IP.

Pour cela, le serveur comprend, outre la mémoire tampon 31, des moyens de transmission/réception de données qui peuvent se matérialiser sous la forme d'une interface de connexion à un ou plusieurs réseaux de communication, ces moyens permettant éventuellement d'établir une liaison avec un réseau étendu du type Internet. Il peut s'agir d'interfaces logicielles ou d'interfaces matérielles (de type carte réseau ou modules matériels de communication réseau). Selon l'invention, un tel serveur comprend en outre des moyens de stockage qui peuvent prendre la forme d'une base de données, ou un accès à de tels moyens de stockage externes au serveur. Ces moyens de stockage comprennent une structure de données au sein de laquelle sont enregistrées des associations entre des données représentatives d'adresses MAC et des adresses IP.

## Revendications

1. Procédé de résolution d'une adresse IP, comprenant :
- une étape de réception (21), par un serveur DNS, d'une requête de résolution d'adresse, ladite requête comprenant une donnée représentative d'une adresse MAC, dans laquelle ladite adresse MAC identifie un objet communicant connecté à un réseau sans-fil local, ladite donnée représentative d'une adresse MAC présentant le formalisme d'un nom de domaine, ledit nom de domaine étant composé d'au moins deux domaines successifs :
- un premier domaine de niveau inférieur, formé à partir de ladite adresse MAC ;
- au moins un domaine de niveau supérieur, prédéterminé ;
- une étape de recherche (22), au sein d'une base de données d'adresses du serveur DNS, d'une adresse IP, en fonction de ladite donnée représentative d'une adresse MAC, dans laquelle ladite adresse IP identifie un équipement avec lequel ledit objet communicant doit échanger des données;
- une étape de transmission (23) de ladite adresse IP par le serveur DNS à une passerelle interconnectant le réseau sans-fil local avec un réseau étendu.

2. Procédé de résolution d'une adresse IP selon la revendication 1, **caractérisé en ce qu'**il comprend en outre au moins une étape de recherche, au sein d'une structure de données du serveur DNS, d'au moins une information complémentaire en fonction de ladite donnée représentative d'une adresse MAC, ladite au moins une information complémentaire étant transmise par le serveur DNS à la passerelle conjointement à ladite adresse IP, lors de ladite étape de transmission de ladite adresse IP.

3. Procédé de résolution d'une adresse IP selon l'une quelconque des revendications 1 à 2, **caractérisé en ce qu'**il comprend en outre au moins une itération des étapes suivantes :
- une étape de réception par le serveur DNS d'une requête complémentaire, ladite requête complémentaire comprenant ladite donnée représentative d'une adresse MAC et une donnée représentative d'un type de requête ;
- une étape de recherche, au sein d'une structure de données du serveur DNS, d'au moins une information complémentaire, en fonction de ladite donnée représentative d'une adresse MAC et de ladite donnée représentative d'un type de requête ;
- une étape de transmission de ladite au moins une information complémentaire par le serveur DNS à la passerelle.

4. Procédé de résolution d'une adresse IP selon l'une quelconque des revendications 2 à 3, **caractérisé en ce que** ladite au moins une information complémentaire appartient au groupe comprenant :
- un numéro de port ;
- un nom d'hôte ;
- un type de service ;
- un protocole de communication.

5. Serveur DNS de résolution d'une adresse IP comprenant :
- des moyens de réception d'une requête de résolution d'adresse, ladite requête comprenant une donnée représentative d'une adresse MAC, dans laquelle ladite adresse MAC identifie un objet communicant connecté à un réseau sans-fil local, ladite donnée représentative d'une adresse MAC présentant le formalisme d'un nom de domaine, ledit nom de domaine étant composé d'au moins deux domaines successifs :
- un premier domaine de niveau inférieur, formé à partir de ladite adresse MAC ;
- au moins un domaine de niveau supérieur, prédéterminé;
- des moyens de recherche, au sein d'une base de données d'adresses du serveur DNS, d'une adresse IP, en fonction de ladite donnée représentative d'une adresse MAC, ladite adresse IP identifiant un équipement avec lequel ledit objet communicant doit échanger des données ;
- des moyens de transmission de ladite adresse IP à une passerelle interconnectant le réseau sans-fil local avec un réseau étendu.

6. Produit programme d'ordinateur téléchargeable depuis un réseau de communication et/ou stocké sur un support lisible par ordinateur et/ou exécutable par un microprocesseur, comprenant des instructions de code de programme pour l'exécution du procédé de résolution d'une adresse IP selon quelconque des revendications 1 à 4, lorsqu'il est exécuté sur un serveur DNS.

## Patentansprüche

1. Verfahren zur Auflösung einer IP-Adresse umfassend:
- einen Schritt zum Empfangen eines Antrages auf Auflösung einer Adresse mittels eines DNS-Servers, wobei der Antrag einen Datenwert einer MAC-Adresse umfasst, wobei die MAC-Adresse ein kommunizierendes Element, welches mit einem lokalen WLAN-Netz verbunden ist, identifiziert, wobei der Datenwert einer MAC-Adresse den Formalismus eines Domainnamens aufweist, wobei der Domainname aus mindestens zwei aufeinanderfolgenden Domains gebildet wird:
- eine erste Domain der untersten Ebene, welche aus der MAC-Adresse gebildet wird;
- mindestens eine vorgegebene Domain der oberen Ebene;
- einen Rechercheschritt (22) einer IP-Adresse entsprechend dem Datenwert der MAC-Adresse innerhalb einer Adressdatenbank des DNS-Servers, wobei die IP-Adresse eine Vorrichtung ermittelt, mit der das kommunizierende Objekt Daten austauschen soll;
- einen Übermittlungsschritt (23) der IP-Adresse durch den DNS-Server an ein Gateway, welches das lokale WLAN-Netz mit einem WAN-Netz verbindet.

2. Verfahren zur Auflösung einer IP-Adresse gemäß Anspruch 1, **dadurch gekennzeichnet, dass** es weiterhin mindestens einen Rechercheschritt mindestens einer Zusatzinformation entsprechend dem Datenwert einer MAC-Adresse innerhalb einer Datenstruktur des DNS Servers umfasst, wobei die mindestens eine Zusatzinformation durch den DNS-Server zeitgleich an das Gateway und die IP-Adresse übermittelt wird, während des Übermittlungsschrittes der IP-Adresse.

3. Verfahren zur Auflösung einer IP-Adresse gemäß einem der Ansprüche 1 bis 2, **dadurch gekennzeichnet, dass** es weiterhin mindestens eine Iteration der folgenden Schritte umfasst:
- einen Schritt zum Empfangen eines zusätzlichen Antrages mittels eines DNS-Servers, wobei der zusätzliche Antrag den Datenwert der MAC-Adresse und einen Datenwert einer Antragsart umfasst;
- einen Rechercheschritt mindestens einer zusätzlichen Information entsprechend dem Datenwert einer MAC-Adresse und dem Datenwert einer Antragsart innerhalb einer Datenstruktur des DNS-Servers;
- einen Übermittlungsschritt der mindestens einen Zusatzinformation durch den DNS-Server an das Gateway.

4. Verfahren zur Auflösung einer IP-Adresse gemäß einem der Ansprüche 2 bis 3, **dadurch gekennzeichnet, dass** die mindestens eine Zusatzinformation aus der folgenden Gruppe stammt:
- eine Port-Nummer;
- ein Host-Name;
- einen ToS;
- ein Kommunikationsprotokoll.

5. DNS-Server zur Auflösung einer IP-Adresse umfassend:
- Mittel zum Empfang eines Antrages auf Auflösung einer IP-Adresse, wobei der Antrag einen Datenwert der MAC-Adresse umfasst, wobei die MAC-Adresse ein kommunizierendes Element, welches mit dem lokalen WLAN-Netzwerk verbunden ist, identifiziert, wobei der Datenwert der MAC-Adresse einen Formalismus eines Domainnamens aufweist, wobei der Domainname aus mindestens zwei aufeinanderfolgenden Domains gebildet wird:
- eine erste Domain der untersten Ebene, welche aus der MAC-Adresse gebildet wird;
- mindestens eine vorgegebene Domain der oberen Ebene;
- Mittel zur Recherche einer IP-Adresse entsprechend dem Datenwert der MAC-Adresse innerhalb einer Adressdatenbank des DNS-Servers, wobei die IP-Adresse eine Vorrichtung ermittelt, mit der das kommunizierende Objekt Daten austauschen soll;
- Mittel zur Übertragung der IP-Adresse durch den DNS-Server an ein Gateway, welches das lokale WLAN-Netz mit einem WAN-Netz verbindet.

6. Computerprogramm, welches über ein Kommunikationsnetzwerk herunterladbar ist und/oder auf einem Computer-lesbaren Datenträger gespeichert ist und/oder durch einen Mikroprozessor ausführbar ist, umfassend
Programmcodeanweisungen zur Ausführung des Verfahrens zur Auflösung einer IP-Adresse gemäß einem der Ansprüche 1 bis 4 während seiner Ausführung auf einem DNS-Server.

## Claims

1. A method for resolving an IP address, comprising:
- a step (21) of receiving, by a DNS server, an address resolution request, said request comprising a datum representative of a MAC address, in which said MAC address identifies a communicating object connected to a wireless local area network, said datum representative of a MAC address having the formalism of a domain name, said domain name being composed of at least two successive domains:
- a first lower-level domain, formed from said MAC address;
- at least one predetermined top-level domain;
- a step (22) of looking up, within a database of addresses of the DNS server, an IP address, depending on said datum representative of a MAC address, in which said IP address identifies a device with which said communicating object has to exchange data;
- a step (23) of transmitting said IP address, by the DNS server, to a gateway interconnecting the wireless local area network with a wide area network.

2. The method for resolving an IP address as claimed in claim 1, **characterized in that** it furthermore comprises at least one step of looking up, within a data structure of the DNS server, at least one additional item of information depending on said datum representative of a MAC address, said at least one additional item of information being transmitted, by the DNS server to the gateway, together with said IP address during said step of transmitting said IP address.

3. The method for resolving an IP address as claimed in either one of claims 1 and 2, **characterized in that** it furthermore comprises at least one repetition of the following steps:
- a step of receiving, by the DNS server, an additional request, said additional request comprising said datum representative of a MAC address and a datum representative of a type of request;
- a step of looking up, within a data structure of the DNS server, at least one additional item of information, depending on said datum representative of a MAC address and on said datum representative of a type of request;
- a step of transmitting, by the DNS server to the gateway, said at least one additional item of information.

4. The method for resolving an IP address as claimed in either one of claims 2 and 3, **characterized in that** said at least one additional item of information belongs to the group comprising:
- a port number;
- a host name;
- a service type;
- a communication protocol.

5. A DNS server for resolving an IP address, comprising:
- means for receiving an address resolution request, said request comprising a datum representative of a MAC address, in which said MAC address identifies a communicating object connected to a wireless local area network, said datum representative of a MAC address having the formalism of a domain name, said domain name being composed of at least two successive domains:
- a first lower-level domain, formed from said MAC address;
- at least one predetermined top-level domain;
- means for looking up, within a database of addresses of the DNS server, an IP address, depending on said datum representative of a MAC address, said IP address identifying a device with which said communicating object has to exchange data;
- means for transmitting said IP address to a gateway interconnecting the wireless local area network with a wide area network.

6. A computer program product downloadable from a communication network and/or stored on a computer-readable carrier and/or able to be executed by a microprocessor, comprising program code instructions for the execution of the method for resolving an IP address as claimed in any one of claims 1 to 4 when it is executed on a DNS server.
